# EUROPÄISCHE PATENTSCHRIFT

(11) **EP 0 832 590 B1**
(45) Veröffentlichungstag und Bekanntmachung des Hinweises auf die Patenterteilung: **05.11.2003**
(21) Anmeldenummer: 97114676.6
(22) Anmeldetag: 25.08.1997
(51) Int. Cl.: A47J 27/04

(54) **Gargerät mit im Garraum abstellbarem Garbehältnis zum Dampfgaren**
Baking oven with food steamer to be placed therein
Four de cuisson avec cuiseur à vapeur déposé dans l'enceinte

(30) Priorität: 20.09.1996 DE 19638664
(43) Veröffentlichungstag der Anmeldung: 01.04.1998
(73) Patentinhaber: BSH Bosch und Siemens Hausgeräte GmbH, 81669 München (DE)
(72) Erfinder: Plankl, Manfred, Dipl.-Ing., 83301 Traunreut (DE); Stein, Katja, 83301 Traunreut (DE); Stolz, Susanne, 84559 Kraiburg (DE)

(56) Entgegenhaltungen:
- EP-A- 0 165 187
- EP-A- 0 171 522
- EP-A- 0 517 681
- EP-A- 0 664 097
- DE-A- 4 116 425
- GB-A- 2 198 631
- US-A- 4 426 923

## Beschreibung

Die vorliegende Erfindung betrifft ein Gargerät mit einem Garraum, in den ein mit einem Deckel abdeckbares, druckloses Garbehältnis stellbar ist, und mit einem Dampferzeuger, der über eine Dampfleitung das Garbehältnis speist, und mit einer Steuervorrichtung zur Steuerung des Dampferzeugers und betrifft ein Verfahren zum Betreiben eines entsprechenden Gargerätes, wobei zunächst Dampf von einem Dampferzeuger in ein mit einem Deckel abgedecktes, druckloses im Garraum abgestelltes Garbehältnis eingespeist wird, welcher eingespeiste Dampf zunächst überwiegend an einem im Garbehältnis befindlichen Gargut kondensiert, bis das Gargut entsprechend der Temperatur des Dampfes erwärmt ist und der überschüssige Dampf anschließend aus dem Garbehältnis quillt.

Ein derartiges Gargerät sowie das Verfahren zum Betreiben des Gargerätes sind bekannt aus der Europäischen Patentschrift EP 0 165 187 B1. Wenn dabei das in dem Garbehältnis befindliche Gargut bzw. die Innenwandung des Garbehältnisses infolge der Beaufschlagung mit Dampf eine ausreichende Temperatur erreicht hat, kondensiert der in das Garbehältnis eingespeiste Dampf kaum mehr auf dem Gargut bzw. an der Innenwandung. Der große Dampfüberschuß wird aus dem mit einem aufliegenden Deckel abgedeckten Garbehältnis in den Garraum gedrückt. Nachteilig dabei ist, daß das Einspeisen des Dampfes in das Garbehältnis solange fortgesetzt wird, bis der Dampferzeuger mangels Wasser die Dampferzeugung einstellt. Dadurch wird unnötig Energie vergeudet und der Garraum unnötig feucht.

Aus dem Dokument EP-A- 0 664 097 ist ein Gargerät bekannt, in dessen Garraum ein Garbehältnis angeordnet ist. Von dem Garbehältnis austretender Dampf strömt über einen Durchlass in eine Auslassleitung, die den Dampf aus dem Garraum führt. Innerhalb der Auslassleitung ist ein Sensor angeordnet, der den Dampf detektiert. Durch seine Anordnung innerhalb der Auslassleitung kann der Sensor Betriebszustände im Garbehältnis detektieren. Aufgabe der vorliegenden Erfindung ist es, ein Gargerät und ein entsprechendes Garverfahren bereitzustellen, die mit einfachen Mitteln diese Nachteile beseitigen.

Erfindungsgemäß wird dies bei einem gattungsgemäßen Gargerät dadurch erreicht, daß dieses gemäß dem Kennzeichnungsteil des Patentanspruches 1 weitergebildet ist und mit einem Verfahren entsprechend dem Kennzeichnungsteil des Patentanspruches 12 betrieben wird. Beim Dampfgaren erfolgt die Erwärmung des Gargutes mit Dampf. Dabei ist anfangs eine möglichst hohe Dampfmenge erforderlich, um das Gargut möglichst schnell zu erwärmen. Der Dampf kondensiert am Gargut und gibt dabei seine Wärmeenergie an das Gargut ab (Ankochphase). Nach einer gewissen Zeitdauer hat das Gargut eine Temperatur erreicht, bei der, wenn überhaupt, nur noch ein geringer Anteil des Dampfes auf dem Gargut kondensiert, um die fortlaufenden Energieverluste im Garraum bzw. im Garbehältnis und des Gargutes zu ersetzten (Fortkochphase). Nach Beendigung der Ankochphase würde also, wenn keine geeigneten Maßnahmen ergriffen werden, eine zu große Dampfmenge in das Garbehältnis eingespeist, so daß ein Großteil des Dampfes aus dem mit einem aufgelegten Deckel abgedeckten, also drucktechnisch offenen Garbehältnis quillt und aufgrund der im Vergleich zur Luft geringeren spezifischen Dichte nach oben stiegt. Dieser Effekt wird erfindungsgemäß mit einer einfachen Sensorik detektiert, die nur zwischen den Zuständen kein Dampf bzw. wenig Dampf und viel Dampf unterscheiden können muß. Es ist insbesondere nicht erforderlich, über die gesamte Dauer der Ankochphase diese mit aufwendigen Sensoren und einer entsprechenden Signalverarbeitung zu überwachen. Dies wäre ansonsten jedoch erforderlich, da der Zeitpunkt zum Zurückschalten der Dampfleistung, also dem Ende der Ankochphase und dem Beginn der Fortkochphase. kaum zu ermitteln ist, da er jeweils unter anderem von der Menge des Lebensmittels und anderen Parametern abhängt.

Gemäß einer bevorzugten Ausführungsform ist der Sensor ein Temperatursensor. Aufgrund der einfachen meßtechnischen Aufgabenstellung, nämlich im wesentlichen die Unterscheidung zwischen den Zuständen "Dampf nein" und "Dampf ja", ist ein Temperatursensor ausreichend. Dieser detektiert den Temperatursprung, der durch das Quillen des heißen Dampfes aus dem Garbehältnis hervorgerufen wird. Ein besonders großer Temperatursprung liegt vor, wenn während der Ankochphase der Garraum nicht zusätzlich mit anderen bei Gargeräten üblichen Heizelementen beheizt ist. Wenn der Garraum bei anderen Betriebsarten mit einem Heizelement beheizbar ist, kann der Temperatursensor vorteilhafterweise zusätzlich zur Regelung des Heizelementes dienen.

Alternativ ist als Sensor ein Feuchtesensor bereitgestellt. Dieser reagiert spezifisch auf Feuchteänderungen und ermöglicht es, falls dies erforderlich ist, eine feinfühligere Detektion der Dampf- bzw. Feuchtmenge im Garraum vorzunehmen. Der Feuchtesensor ist jedoch bzgl. seiner Lebensdauer und Zuverlässigkeit problematischer als beispielsweise ein Temperatursensor.

Möglich wäre es auch, einen Drucksensor oder einen Leitfähigkeitssensor zum Erkennen des Endes der Ankochphase zu verwenden. Dabei ist der Drucksensor mit Vorteil in der Dampfleitung angeordnet, durch die das Garbehältnis mit Dampf gespeist wird.

Vorteilhafterweise ist ein räumlicher Abstellbereich des Garbehältnisses im Garraum festgelegt. Dies kann auf einfache Weise durch eine starre Dampfleitung realisiert sein, die aus der Garraumwandung in das Innere des Garraums ragt. Es ist dadurch sichergestellt, daß der Bereich, in den der aus dem Garbehältnis am Ende der Ankochphase austretende Dampf strömt, örtlich festgelegt ist. Der Sensor kann entsprechend positioniert werden, damit der Dampf ohne unnötigen Zeitverzug zum Sensor gelangen kann.

Dies ist dadurch weiter verbessert, daß das Garbehältnis und/oder der Deckel zumindest eine auf den Sensor richtbare Dampfaustrittsöffnung aufweisen. Vorteilhafterweise ist auch die Lage der Dampfaustrittsöffnung bei in den Garraum eingesetztem Garbehältnis relativ zum Sensor festgelegt und kann von einer Bedienperson nicht verändert werden. Dadurch ist sichergestellt, daß am Ende der Ankochphase stets quasi ein Dampfstoß direkt auf den Sensor gerichtet ist.

Vorteilhaft kann es diesbezüglich auch sein, wenn der Deckel derart ausgebildet ist, das er erst infolge eines sich am Ende der Ankochphase aufbauenden geringen Überdrucks Dampf aus dem Garbehältnis austreten läßt.

Die Detektion des Endes der Ankochphase kann feinfühliger gestaltet werden, wenn die Steuervorrichtung mit Hilfe des Sensors ein Ansteigen der je Zeiteinheit aus dem Garbehältnis austretenden Dampfmenge detektiert. Während der Ankochphase ist diese Dampfmenge deutlich geringer, unter idealen Bedingungen sogar gleich Null, als nach dem Ende der Ankochphase. Ebenso kann, wenn dies von Vorteil ist, ein Ansteigen der aus dem Garbehältnis austretenden Dampfmenge über einen vorgegebenen Schwellwert detektiert werden. Der damit verbundene Aufwand ist geringer als die Überwachung der je Zeiteinheit austretenden Dampfmenge.

Ebenso ist es möglich, anstelle oder neben der Detektion der Dampfmenge die Änderung der Garraum-Innenraumtemperatur bzw. die Temperatur unmittelbar am Temperatursensor zu überwachen. Denn während der Ankochphase steigt die Garraum-Innentemperatur wesentlich langsamer an als nach dessen Ende, da der Dampf zunächst in großen Mengen aus dem Garbehältnis strömt und an den Innenwandungen des Garraums kondensiert und diesen dadurch erwärmt. Im Falle des direkt auf den Temperatursensor strömenden Dampfes wird dessen unmittelbare Erwärmung detektiert. Falls die Steuervorrichtung die Dampfzufuhr aufgrund der Messung der Garraum-Innentemperatur bzw. der Sensortemperatur regelt, sind die besonderen Gegebenheiten bei einem vorgewärmten Garraum zu beachten. Aufgrund vorhergehender Garprozesse kann nämlich die Garraum-Innentemperatur bzw. die Sensortemperatur über einem Wert liegen, der durch die Erwärmung mit Dampf möglich ist. In diesem Fall muß als Detektionskriterium des Endes der Ankochphase ein anderes Kriterium als das Ansteigen der Garraum-Innentemperatur bzw. die Sensortemperatur verwendet werden. Beispielsweise kann der Temperatursensor durch das Anströmen mit Dampf gekühlt werden.

Nachfolgend ist anhand schematischer Darstellungen ein Ausführungsbeispiel des erfindungsgemäßen Gargerätes und des erfindungsgemäßen Garverfahrens beschrieben.

Es zeigen
- Fig. 1: eine schematisierte Seitenansicht des erfindungsgemäßen Gargerätes zum Dampfgaren und
- Fig. 2: ein Zeitdiagramm eines typischen Zeitverlaufes der Dampfmenge bei einem Garbetrieb entsprechend dem erfindungsgemäßen Garverfahren.

Ein Backofen 1 weist eine Backofenmuffel 3 auf, die in an ihrer Frontseite mit einer Tür 5 verschließbar ist. Die Backofenmuffel 3 ist in an sich bekannter Weise von einer Wärmeisolation umgeben (nicht gezeigt) und mit einem Oberhitze-Heizkörper 7 und gegebenenfalls weiteren Heizkörpern (nicht gezeigt) ausgestattet. Unterhalb der Decke der Backofenmuffel 3 ist ein Temperatursensor 9 in der Backofenmuffel 3 an dieser gehaltert. Der Temperatursensor 9 ist über eine Steuerleitung mit einer Steuervorrichtung 11 des Backofens 1 verbunden. Die Steuervorrichtung ist im Bereich zwischen der Decke der Backofenmuffel 3 und der Decke des Gargerätes 1 angeordnet. Über einem im Frontblendenbereich des Gargerätes 1 vorgesehenen Einstellknebel 13 sind unter anderem über die Steuervorrichtung 11 Parameter für einen Dampferzeuger 15, wie beispielsweise zu erzeugende Dampfmenge und/oder Dampftemperatur vorgebbar. Der Ausgang des Dampferzeugers 15 ist über eine Dampfleitung 17 mit einer Öffnung in einer Seitenwandung der Backofenmuffel 3 verbunden. Mit dieser Öffnung ist betriebsgemäß ein starres rohrförmiges Dampfanschlußstück 19 kuppelbar, das die Öffnung bzw. die Dampfleitung 17 mit einem topfförmigen Garbehältnis 21 verbindet. Dieses ist auf einem in der Backofenmuffel 3 gehalterten Trägerelement 23 abgestellt. Das Trägerelement 23 ist in verschiedenen Höhen der Backofenmuffel 3 anordenbar. Deshalb kann auch vorgesehen sein. wenn geeignete Maßnahmen wie nachfolgend beschrieben ergriffen sind, das Dampfanschlußstück 19 nicht starr, sondern flexibel zu gestalten. Zur dann eventuell erforderlichen geometrischen Festlegung des Standortes des Garbehältnis 21 relativ zum Temperatursensor 9 weist das Trägerelement 23 als Markierungs- und Fixierungseinrichtung an seiner Oberseite eine entsprechende ringförmige Erhebung 25 auf. Im Garbehältnis 21 befindet sich ein Gargut, das direkt von dem aus dem Dampfanschlußstück 19 in das Garbehältnis 21 strömenden Dampf (nicht gezeigt) angeströmt und erwärmt wird. Das Garbehältnis 21 ist oben mit einem Deckel 27 verschließbar, der eine Dampfaustnttsöffnung 29 aufweist. Diese ist auf den Temperatursensor 9 gerichtet. Die Lage des Garbehältnisses 21 bzw. der Dampfaustrittsöffnung 29 relativ zum Temperatursensor 9 und die Auswertung dessen Signal durch die Steuervorrichtung 11 sind so aufeinander abgestimmt, damit ein Ende der Ankochphase sicher erkannt wird. Dabei ist eine eventuell während der Ankochphase aus der Dampfaustrittsöffnung 29 austretende, geringfügige Dampfmenge berücksichtigt.

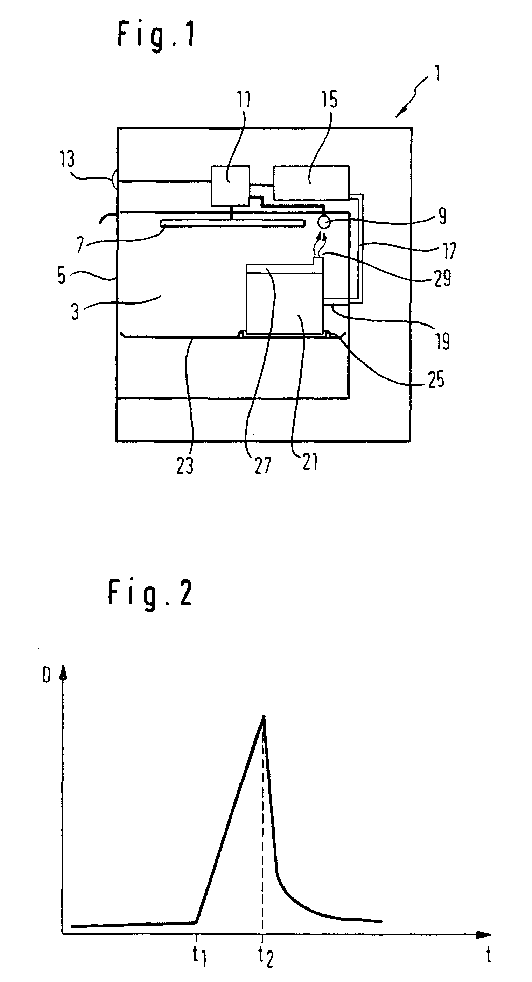

Zur Funktion des Backofens 1 und dem entsprechenden Garverfahren ist ergänzend auf Fig. 2 hingewiesen. Zu Beginn des Backvorganges wird das Garbehältnis 21 derart in der Backofenmuffel positioniert, daß die Dampfaustrittsöffnung 29 auf den Temperatursensor 9 gerichtet ist. Die Lage der Dampfaustnttsöffnung 29 ist dabei, wie oben beschrieben, festgelegt. Anschließend wird über den Einstellknebel 13 der Garprozeß gestartet. Der Oberhitze-Heizkörper 7 bleibt ausgeschaltet und der Dampferzeuger 15 beginnt durch Erhitzen von Wasser mit der Dampferzeugung. In der Ankochphase gelangt nur eine geringe Dampfmenge D aus der Dampfaustrittsöffnung 29 aus dem Garbehältnis 21, weil der Dampf überwiegend am Gargut in dem Garbehältnis 21 bzw. dessen Innenwandung kondensiert. Zum Zeitpunkt t1 ist die Ankochphase beendet. Das Gargut und auch das Garbehältnis 21 sind so weit erwärmt, daß der Dampf nicht mehr daran kondensieren kann. Eine große Menge Dampfes strömt aus der Dampfaustrittsöffnung 29 zu dem Temperatursensor 9 (Strömungspfeile in Fig. 1). Dieser meldet infolge einer Erwärmung auf über etwa 80°C rasch das Ende der Ankochphase an die Steuervorrichtung 11, die zum Zeitpunkt t2 den Dampferzeuger 15 abschaltet bzw. die Dampfmenge so weit reduziert, daß ein Fortkochen des Gargutes stattfinden kann (Fortkochphase). Gegebenfalls werden nun weitere Heizkörper wie beispielsweise der Oberhitze-Heizkörper zugeschaltet.

## Patentansprüche

1. Gargerät mit einem Garraum (3), in den ein mit einem Deckel (27) abgedecktes, druckloses Garbehältnis (21) gestellt ist, und mit einem Dampferzeuger (15), der über eine Dampfleitung (17) das Garbehältnis (21) speist, und mit einer Steuervorrichtung (11) zur Steuerung des Dampferzeugers (15), **dadurch gekennzeichnet, daß** ein Sensor (9) mit der Steuervorrichtung (11) verbunden ist, der das Austreten des Dampfes aus dem Garbehältnis (21) detektiert, und daß die Steuervorrichtung (11) beim Empfang des entsprechenden Signals des Sensors (9) die in das Garbehältnis eingespeiste Dampfmenge reduziert.

2. Gargerät nach Anspruch 1, **dadurch gekennzeichnet, daß** der Sensor ein Temperatursensor (9) ist.

3. Gargerät nach Anspruch 2. dessen Garraum mit zumindest einem Heizelement beheizbar ist, **dadurch gekennzeichnet, daß** der Temperatursensor (9) zur Regelung des Heizelementes (7) dient.

4. Gargerät nach Anspruch 1, **dadurch gekennzeichnet, daß** der Sensor ein Feuchtesensor ist.

5. Gargerät nach einem der vorhergehenden Ansprüche, **dadurch gekennzeichnet, daß** ein räumlicher Abstellbereich für das Garbehältnis (21) im Garraum (3) festgelegt ist.

6. Gargerät nach einem der vorhergehenden Ansprüche, **dadurch gekennzeichnet, daß** das Garbehältnis und/oder der Deckel (27) zumindest eine auf den Sensor (9) gerichtete Dampfaustrittsöffnung (29) aufweisen.

7. Gargerät nach Anspruch 6, **dadurch gekennzeichnet, daß** die Lage der Dampfaustrittsöffnung (29) bei in den Garraum (3) eingesetztem Garbehältnis (21) relativ zum Sensor (9) festlegbar ist.

8. Gargerät nach einem der vorhergehenden Ansprüche, **dadurch gekennzeichnet, daß** die Steuervorrichtung (11) mithilfe des Sensors (9) ein Ansteigen der je Zeiteinheit aus dem Garbehältnis austretenden Dampfmenge detektiert.

9. Gargerät nach einem der vorhergehenden Ansprüche, **dadurch gekennzeichnet, daß** die Steuervorrichtung (11) mithilfe des Sensors (9) ein Ansteigen der aus dem Garbehältnis austretenden Dampfmenge über einen Schwellwert detektiert.

10. Gargerät nach einem der vorhergehenden Ansprüche, **dadurch gekennzeichnet, daß** die Steuervorrichtung (11) mithilfe des Sensors (9) ein Ansteigen der je Zeiteinheit auftretenden Änderung der Garraum-Innentemperatur detektiert.

11. Gargerät nach einem der vorhergehenden Ansprüche, **dadurch gekennzeichnet, daß** die Steuervorrichtung (11) mithilfe des Sensors (9) ein Ansteigen der Garraum-Innentemperatur über einen Grenzwert detektiert.

12. Verfahren zum Betreiben eines Gargerätes (1) mit einem Garraum (3), wobei zunächst Dampf von einem Dampferzeuger (15) in ein mit einem Deckel (27) abgedecktes, druckloses im Garraum (3) abgestelltes Garbehältnis (21) eingespeist wird, welcher eingespeiste Dampf zunächst überwiegend an einem im Garbehältnis (21) befindlichen Gargut kondensiert, bis das Gargut entsprechend der Temperatur des Dampfes erwärmt ist und der Dampf anschließend aus dem Garbehältnis quillt, **dadurch gekennzeichnet, daß** das Überquellen von einem Sensor (9) detektiert wird, und eine Steuervorrichtung (11) beim Empfang des entsprechenden Signals des Sensors die in das Garbehältnis (21) eingespeiste Dampfmenge reduziert.

## Claims

1. Cooking appliance with a cooking space (3), in which an unpressurised cooking container (21) covered by a lid (27) is placed and with a steam producer (15) which supplies the cooking container (21) by way of a steam duct (17), and with a control device (11) for controlling the steam producer (15), **characterised in that** a sensor (9) is connected with the control device (11) and detects the issue of steam from the cooking container (21), and that the control device (11) on reception of the corresponding signal of the sensor (9) reduces the steam quantity supplied to the cooking container.

2. Cooking appliance according to claim 1, **characterised in that** the sensor is a temperature sensor (9).

3. Cooking appliance according to claim 2, the cooking space of which is heatable by at least one heating element, **characterised in that** the temperature sensor (9) serves for regulating the heating element (7).

4. Cooking appliance according to claim 1, **characterised in that** the sensor is a moisture sensor.

5. Cooking appliance according to one of the preceding claims, **characterised in that** a three-dimensional deposit region for the cooking container (21) is established in the cooking space (3).

6. Cooking appliance according to one of the preceding claims, **characterised in that** the cooking container and/or the lid (27) has or have at least one steam exit opening (29) oriented towards the sensor (9).

7. Cooking appliance according to claim 6, **characterised in that** the position of the steam exit opening (29) can be fixed relative to the sensor (9) when the cooking container (21) is inserted in the cooking space (3).

8. Cooking appliance according to one of the preceding claims, **characterised in that** the control device (11) detects with the help of the sensor (9) a rise in the steam quantity issuing from the cooking container per unit time.

9. Cooking appliance according to one of the preceding claims, **characterised in that** the control device (11) with the help of the sensor (9) detects a rise in the steam quantity, which issues from the cooking container, beyond a threshold value.

10. Cooking appliance according to one of the preceding claims, **characterised in that** the control device (11) with the help of the sensor (9) detects a rise in the change, which occurs per unit time, of the cooking space internal temperature.

11. Cooking appliance according to one of the preceding claims, **characterised in that** the control device (11) with the help of the sensor (9) detects a rise in the cooking space internal temperature above a limit value.

12. Method of operating a cooking appliance (1) with a cooking space (3), wherein initially steam is supplied from a steam producer (15) to an unpressurised cooking container (21) which is covered by a lid (27) and placed in a cooking space (3), which supplied steam initially predominantly condenses at stock which is to be cooked and is disposed in the cooking container (21) until the stock to be cooked is heated in correspondence with the temperature of the steam and the steam subsequently wells up out of the cooking container, **characterised in that** the welling up is detected by a sensor (9) and a control device (11) on reception of the corresponding signal of the sensor reduces the steam quantity supplied to the cooking container (21).

## Revendications

1. Cuiseur à vapeur comprenant une chambre de cuisson (3), dans lequel est posé un récipient de cuisson (21) sans pression recouvert par un couvercle (27), et un générateur de vapeur (15) qui alimente le récipient de cuisson (21) par l'intermédiaire d'une conduite de vapeur (17), et un dispositif de commande (11) pour la commande du générateur de vapeur (15), **caractérisé en ce qu'**un capteur (9) est connecté au dispositif de commande (11), qui détecte la fuite de vapeur hors du récipient de cuisson (21), et **en ce que** le dispositif de commande (11) réduit la quantité de vapeur alimentée dans le récipient de cuisson à la réception du signal correspondant du capteur (9).

2. Cuiseur à vapeur suivant la revendication 1, **caractérisé en ce que** le capteur est un capteur de température (9).

3. Cuiseur à vapeur suivant la revendication 2, dont la chambre de cuisson est chauffable au moyen d'au moins un élément de chauffage, **caractérisé en ce que** le capteur de température (9) sert au réglage de l'élément de chauffage (7).

4. Cuiseur à vapeur suivant la revendication 1, **caractérisé en ce que** le capteur est un capteur d'humidité.

5. Cuiseur à vapeur suivant l'une quelconque des revendications précédentes, **caractérisé en ce qu'**une zone de pose du récipient de cuisson (21) dans l'espace est fixée dans la chambre de cuisson (3).

6. Cuiseur à vapeur suivant l'une quelconque des revendications précédentes, **caractérisé en ce que** le récipient de cuisson et/ou le couvercle (27) présentent au moins une ouverture de sortie de vapeur (29) dirigée vers le capteur (9).

7. Cuiseur à vapeur suivant la revendication 6, **caractérisé en ce que** la position de l'ouverture de sortie de vapeur (29) est déterminable par rapport au capteur (9) lorsque le récipient de cuisson (21) est inséré dans la chambre de cuisson (3).

8. Cuiseur à vapeur suivant l'une quelconque des revendications précédentes, **caractérisé en ce que** le dispositif de commande (11) détecte, à l'aide du capteur (9), une augmentation de la quantité de vapeur sortant du récipient de cuisson par unité de temps.

9. Cuiseur à vapeur suivant l'une quelconque des revendications précédentes, **caractérisé en ce que** le dispositif de commande (11) détecte, à l'aide du capteur (9), une augmentation de la quantité de vapeur sortant du récipient de cuisson au-delà d'une valeur de seuil.

10. Cuiseur à vapeur suivant l'une quelconque des revendications précédentes, **caractérisé en ce que** le dispositif de commande (11) détecte, à l'aide du capteur (9), une augmentation de la modification de la température intérieure de la chambre de cuisson se produisant par unité de temps.

11. Cuiseur à vapeur suivant l'une quelconque des revendications précédentes, **caractérisé en ce que** le dispositif de commande (11) détecte, à l'aide du capteur (9), une augmentation de la température intérieure de la chambre de cuisson au-delà d'une valeur limite.

12. Procédé pour le fonctionnement d'un cuiseur à vapeur ( 1) comprenant une chambre de cuisson (3), de la vapeur étant d'abord alimentée par un générateur de vapeur (15) dans un récipient de cuisson (21) sans pression, posé dans une chambre de cuisson (3), recouvert par un couvercle (27), laquelle vapeur alimentée se condense d'abord principalement sur un aliment à cuire se trouvant dans le récipient de cuisson (4), jusqu'à ce que l'aliment à cuire soit échauffé, suivant la température de la vapeur, et que la vapeur jaillisse hors du récipient de cuisson, **caractérisé en ce que** le jaillissement est détecté par un capteur (9) et qu'un dispositif de commande (11) réduit la quantité de vapeur alimentée dans le récipient de cuisson (21) à la réception du signal correspondant du capteur.
